# EUROPÄISCHE PATENTANMELDUNG

(11) **EP 1 741 513 A1**
(43) Veröffentlichungstag der Anmeldung: **10.01.2007**
(21) Anmeldenummer: 06012212.4
(22) Anmeldetag: 14.06.2006
(51) Int. Cl.: B23Q 39/02, B23C 1/04

(54) **Werkzeugmaschine mit mehreren Werkzeugspindeln zum Zirkularfräsen von Löchern**

(30) Priorität: 08.07.2005 DE 102005031933
(71) Anmelder: Keppler, Karl, 72793 Pfullingen (DE)
(72) Erfinder: Flaig, Peter, 72661 Grafenberg (DE)
(74) Vertreter: Kohler Schmid Möbus

(57) **Zusammenfassung**

Eine Werkzeugmaschine (10) zum Herstellen und/oder Bearbeiten von Löchern in einem Werkstück, mit mehreren rotierbaren Werkzeugspindeln für Fräser (12) zum gleichzeitigen Zirkularfräsen mehrerer Löcher sowie ein Verfahren zur Fertigung und/oder Bearbeitung von Löchern in einem Werkstück und ein nach diesem Verfahren hergestelltes Werkstück.

## Beschreibung

Die Erfindung betrifft eine Werkzeugmaschine zum Herstellen und/oder Bearbeiten von Löchern in einem Werkstück, insbesondere der Schraubenlöcher in einer Radscheibe.

Die Löcher in einem Werkstück werden in aller Regel gebohrt und anschließend durch andere Werkzeuge weiterbearbeitet. So können die Löcher beispielsweise mithilfe eines Gewindeschneiders mit einem Gewinde versehen oder durch Senker angefast werden. Dazu werden teilweise Werkzeugmaschinen eingesetzt, die mit mehreren Werkzeugspindeln bestückt sind. Dadurch ist es möglich, gleichzeitig mehrere Löcher zu bohren oder zu bearbeiten.

Weiter ist es bekannt, Löcher in einem Werkstück durch Zirkularfräsen herzustellen und zu bearbeiten, wozu Werkzeugmaschinen eingesetzt werden, deren eine Werkzeugspindel entsprechend den für das Zirkularfräsen erforderlichen Komplexen Bewegungsabläufen angesteuert wird. Das Zirkularfräsen hat den Vorteil, dass weniger Werkzeugwechsel notwendig sind. Je nach Form des Fräsers können mit ihm Löcher gebohrt und zum Beispiel angefast werden.

Der vorliegenden Erfindung liegt die Aufgabe zu Grunde, eine Werkzeugmaschine zu schaffen, mit der die Herstellung und/oder das Bearbeiten von Löchern in Werkstücken deutlich effektiver möglich ist als mit den Maschinen nach dem Stand der Technik.

Die Aufgabe wird mit einer Werkzeugmaschine der eingangs genannten Art gelöst, die erfindungsgemäß gekennzeichnet ist durch mehrere rotierbare Werkzeugspindeln für Fräser zum gleichzeitigen Zirkularfräsen mehrerer Löcher.

Die erfindungsgemäße Werkzeugmaschine vereinigt die Vorteile von Werkzeugmaschinen mit mehreren Spindeln mit den Vorteilen von Werkzeugmaschinen für das Zirkularfräsen. Mit keinem oder nur wenig Werkzeugwechseln können gleichzeitig mehrere Löcher hergestellt und/oder bearbeitet werden. Dabei ist das Vorsehen von mehreren Werkzeugspindeln an einer Fräsmaschine für das Zirkularfräsen keineswegs eine nahe liegende Maßnahme. In den Fachkreisen galt es bisher wegen der komplexen Bewegungsabläufe beim Zirkularfräsen und der hohen auftretenden Kräfte als unmöglich, mehrere Werkzeugspindeln vorsehen und ansteuern zu können.

Insbesondere bei der Bearbeitung mehrerer gleicher oder ähnlicher Werkstücke lässt sich eine optimale Effizienz erreichen, wenn an der Werkzeugmaschine so viele Werkzeugspindeln wie zu fertigende und/oder zu bearbeitende Löcher vorgesehen sind. Dabei können die mehreren Werkzeugspindeln auf einem gemeinsamen Träger befestigt und durch diesen gemeinsam bewegbar sein. Der Steuerungsaufwand bei dieser Ausgestaltung ist damit nicht höher als bei Werkzeugmaschinen für das Zirkularfräsen mit nur einer Spindel. Der Träger kann beispielsweise mittels eines Standard-Dreiachsantriebs bewegt werden.

Eine noch größere Vielfalt an Lochmustern lässt sich jedoch erzeugen, wenn der Werkzeugträger austauschbar ist, sodass Löcher unterschiedlicher Anzahl, unterschiedlichen Abstands und Durchmessers hergestellt und/oder bearbeitet werden können.

Je nach Anforderung können in die Werkzeugspindeln unterschiedliche Zirkular-Fräser eingesetzt werden. Besondere Vorteile ergeben sich allerdings, wenn Kugelfräser eingesetzt werden. Mit Kugelfräser lassen sich die Löcher ein- oder beidseitig anfasen und auch aufweiten.

Die Erfindung betrifft außerdem ein Verfahren zur Fertigung und/oder Bearbeitung von Löchern in Werkstücken, das dadurch gekennzeichnet ist, dass mehrere, vorzugsweise alle zu fertigende und/oder zu bearbeitende Löcher gleichzeitig hergestellt und/oder bearbeitet werden. Zur Durchführung dieses Verfahrens kann eine erfindungsgemäße Werkzeugmaschine eingesetzt werden.

Nach einer bevorzugten Verfahrensvariante werden vorgebohrte Löcher in einem Werkstück durch Kugelfräser in einer Werkstück-Aufspannung ein- oder beidseitig angefast und/oder aufgeweitet. Nach den Verfahren nach dem Stand der Technik ist dies nicht möglich. Selbst wenn die Fasen bei mehreren Löchern gleichzeitig mithilfe einer mit Senkern bestückten, mehrspindeligen Werkzeugmaschine hergestellt werden, so muss zur Herstellung der Fasen auf beiden Seiten der Löcher das Werkstück gewendet werden. Beim Einsatz einer Zirkular-Fräsmaschine nach dem Stand der Technik können zwar beide Fasen in einer Werkzeug-Aufspannung hergestellt werden, doch müssen die Löcher nacheinander bearbeitet werden.

Die Erfindung betrifft weiterhin ein Werkstück, insbesondere eine Radscheibe, mit einer Vielzahl von Löchern, das nach einem erfindungsgemäßen Verfahren hergestellt ist. Die Löcher können dabei ein-oder beidseitig durch Zirkularfräsen angefast sein. Das Herstellen der Fasen durch Zirkularfräsen anstatt durch Senken hat mehrere Vorteile. Einmal sind Fräser günstiger als Senker, und das Fräsen ist eine schnellere Art der Bearbeitung als das Senken. Außerdem entstehen beim Fräsen kurze Späne, was deren Abtransport von Werkstück und Werkzeug vereinfacht. Beim Senken hingegen entstehen lange, spiralförmige Späne. Darüber hinaus wird die Oberfläche der Fase beim Fräsen rauer als beim Senken, was ein erwünschter Effekt ist, da sich Schrauben bei einer rauen Oberfläche der Fase weniger leicht lösen als bei einer glatten Oberfläche.

Nachfolgend werden eine erfindungsgemäße Werkzeugmaschine und ein erfindungsgemäßes Verfahren anhand der Zeichnung näher erläutert.

Es zeigen:
- Fig.1: eine Seitenansicht einer erfindungsgemäßen Werkzeug-maschine
- Fig. 2: eine Vorderansicht der Werkzeugmaschine aus Fig. 1;
- Fig. 3: eine Draufsicht auf die Werkzeugmaschine aus Fig. 1.

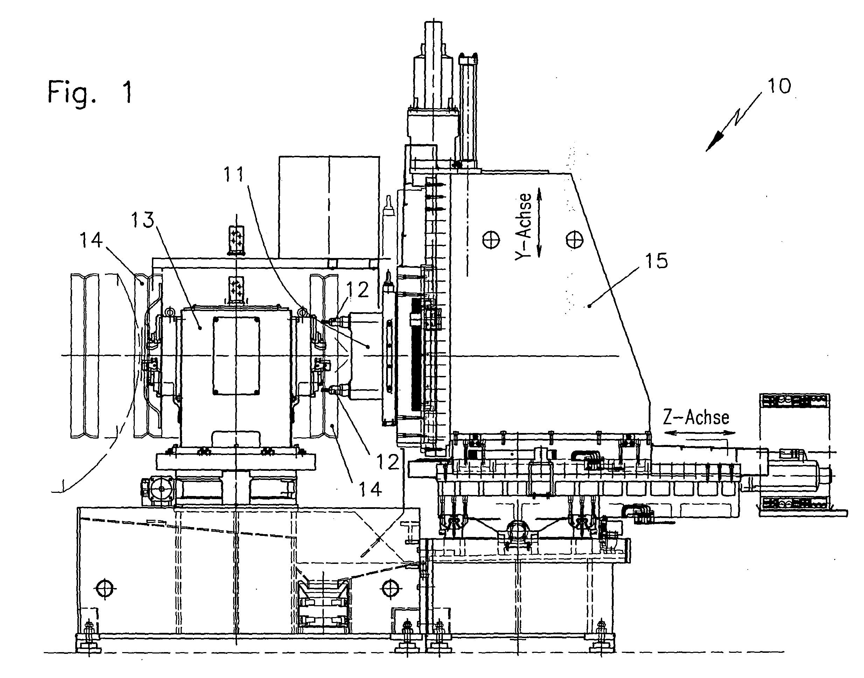

Fig. 1 zeigt eine Fräsmaschine 10, die einen Werkzeug-Träger 11 aufweist, an dem mehrere Fräser 12 angeordnet sind. Vor dem Werkzeug-Träger 11 ist eine Werkstück-Aufspannvorrichtung 13 angeordnet. An ihr ist eine Radscheibe 14 angeordnet. Die Werkstück-Aufspannvorrichtung 13 ist um ihre vertikale Achse drehbar gelagert, sodass jeweils auf einer Seite ein Werkstück bearbeitet werden kann, während auf der gegenüberliegenden Seite ein fertig bearbeitetes Werkstück abgenommen und durch ein neues, zu bearbeitendes Werkstück ersetzt werden kann. Auf diese Weise ist mit der erfindungsgemäßen Werkzeugmaschine 10 eine permanente Bearbeitung von Werkstücken möglich.

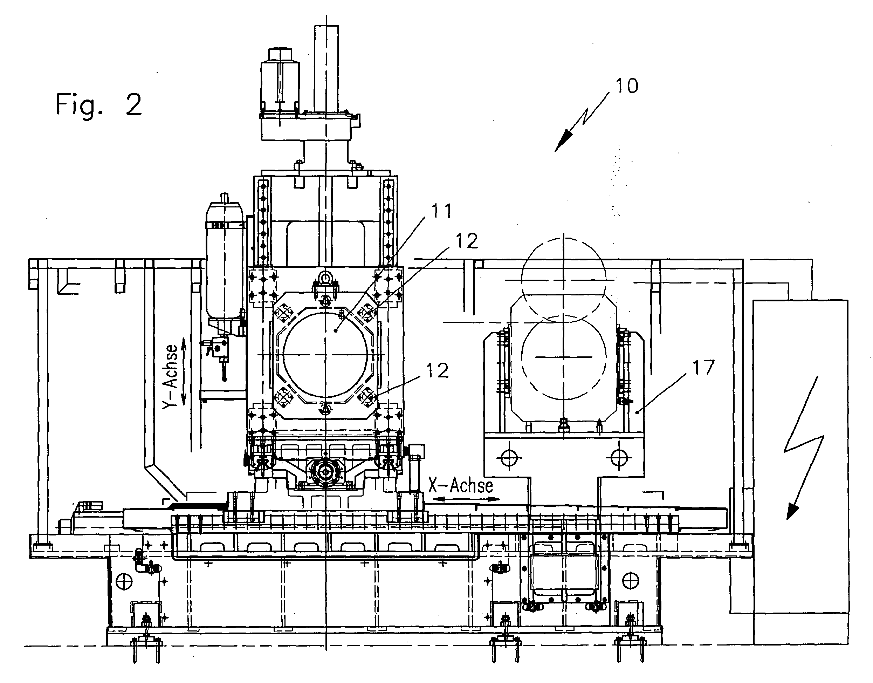

Der Werkzeug-Träger 11 ist an einem Schlitten 15 angeordnet, mit dem er entlang von drei Achsen, von denen in Fig. 1 die y-und die z-Achse eingezeichnet sind, beweglich ist. In der Vorderansicht der Fräsmaschine 10 gemäß Fig. 2 ist auch die x-Achse eingezeichnet. In Fig. 2 ist außerdem eine Aufnahmevorrichtung 17 für Werkzeugträger 11 gezeigt, sodass der mit mehreren Werkzeugen 12 besetzte Werkzeug-Träger 11 ausgewechselt werden kann.

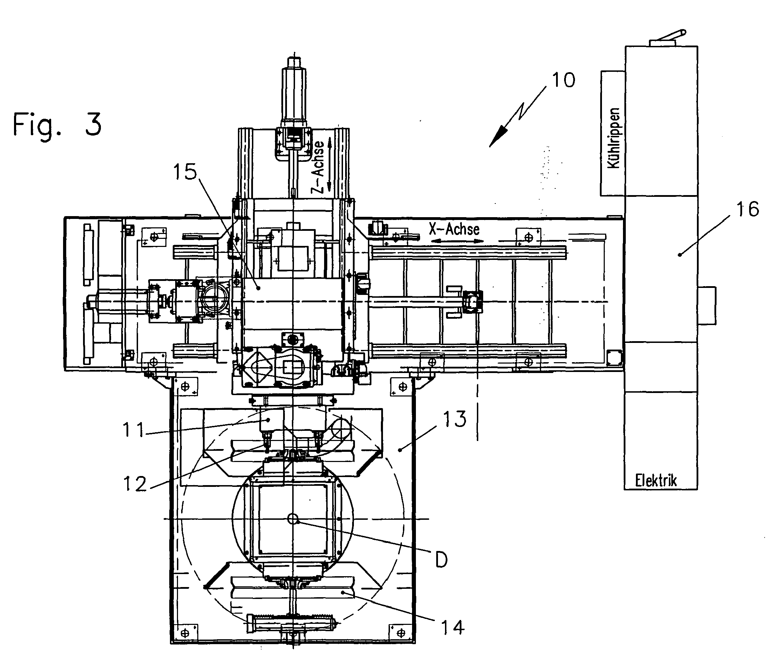

Die Draufsicht auf die Fräsmaschine 10 aus Fig. 3 zeigt neben dem Werkzeug-Träger 11, der Werkstück-Aufspannvorrichtung 13 und dem Schlitten 15 eine Versorgungseinheit 16 der Maschine 10. Außerdem ist die vertikale Drehachse D der Werkstück-Aufspannvorrichtung 13 zu sehen. Um diese Drehachse D ist die Werkstück-Aufspannvorrichtung 13 um 180° oder um 270° drehbar. Auch in Fig. 3 sind wieder Radscheiben 14 zur Bearbeitung durch die am Werkzeug-Träger 11 angeordneten Fräser 12 eingezeichnet. Wenn die Fräser 12 KugelFräser sind, so können mit diesen Löcher in den Radscheiben 14 sowohl aufgeweitet als auch von beiden Seiten angefast werden, ohne die Radscheiben 14 auf der Werkstück-Aufspannvorrichtung 13 umspannen zu müssen.

## Patentansprüche

1. Werkzeugmaschine (10) zum Herstellen und/oder Bearbeiten von Löchern in einem Werkstück, insbesondere der Schraubenlöcher in einer Radscheibe, **gekennzeichnet durch** mehrere rotierbare Werkzeugspindeln für Fräser (12) zum gleichzeitigen Zirkularfräsen mehrerer Löcher.

2. Werkzeugmaschine (10) nach Anspruch 1, **dadurch gekennzeichnet, dass** so viele Werkzeugspindeln wie zu fertigende und/oder zu bearbeitende Löcher vorgesehen sind.

3. Werkzeugmaschine (10) nach Anspruch 1 oder 2, **dadurch gekennzeichnet, dass** die Werkzeugspindeln auf einem gemeinsamen Träger (11) befestigt und durch diesen gemeinsam bewegbar sind.

4. Werkzeugmaschine (10) nach einem der vorhergehenden Ansprüche, **dadurch gekennzeichnet, dass** der Werkzeug-Träger auswechselbar angeordnet ist, sodass Löcher unterschiedlicher Anzahl, unterschiedlichen Abstands und Durchmessers hergestellt und/oder bearbeitet werden können.

5. Werkzeugmaschine (10) nach einem der vorhergehenden Ansprüche, **dadurch gekennzeichnet, dass** als Fräser (12) Kugelfräser einsetzbar sind.

6. Verfahren zur Fertigung und/oder Bearbeitung von Löchern in Werkstücken, **dadurch gekennzeichnet, dass** mehrere, vorzugsweise alle zu fertigenden und/oder zu bearbeitenden Löcher durch Zirkularfräsen gleichzeitig hergestellt und/oder bearbeitet werden.

7. Verfahren nach Anspruch 6, **dadurch gekennzeichnet, dass** vorgebohrte Löcher in einem Werkstück durch Kugelfräser in einer Werkstück-Aufspannung ein- oder beidseitig angefast und/oder aufgeweitet werden.

8. Werkstück, insbesondere Radscheibe (14), mit einer Vielzahl von Löchern, hergestellt nach einem Verfahren nach Anspruch 7 oder 8.

9. Werkstück nach Anspruch 8, **dadurch gekennzeichnet, dass** die Löcher ein- oder beidseitig durch Zirkularfräsen angefast sind.
